# EUROPEAN PATENT APPLICATION

(11) **EP 1 277 394 A1**
(43) Date of publication of application: **22.01.2003**
(21) Application number: 02077405.5
(22) Date of filing: 17.06.2002
(51) Int. Cl.: A01D 78/10

(54) **A hay-making machine**

(30) Priority: 20.07.2001 NL 1018601
(71) Applicant: Lely Enterprises AG, 6300 ZUG (CH)
(72) Inventor: Stremmelaar, Egbert Antonie, 8035 RA Zwolle (NL)
(74) Representative: Corten, Maurice Jean F.M.

(57) **Abstract**

A hay-making machine (1) provided with at least one working member which is rotatable about an upwardly extending axis (2) for working crop lying on the ground. Said working member is supported from the ground (5) via a first chassis (6). A chassis beam (8) is disposed on the first chassis (6), the chassis beam (8) extending from the axis (2) in a direction parallel to a normal direction of travel (A) of the hay-making machine (1). The chassis beam (8) has a front end (9) with which a second chassis (7) is connected.

## Description

The present invention relates to a hay-making machine according to the preamble of claim 1.

Such a machine is known from European patent application 0713640. In this application the first chassis comprises totally four wheels for the support of the hay-making machine. Although such a hay-making machine functions satisfactorily, especially with working members having a great diameter there may occur an undesired tilt, in particular in forward direction.

The invention aims at providing a hay-making machine with which this problem does not occur or at least occurs to a lesser extent.

For that purpose, according to the invention a hay-making machine of the above-described type comprises the measures of the characterizing part of claim 1. The invention is based on the insight that in forward direction there is insufficient support when the working member has a great diameter, because of the fact that with the known hay-making machine the wheels are substantially located in a plane transversely to the normal direction of travel of the hay-making machine. Due to the fact that according to the invention the chassis frame extends in a direction parallel to a normal direction of travel of the hay-making machine, and a second chassis is connected with the front end, there is created sufficient support in forward direction, so that working members having a greater diameter can correctly be supported.

For the purpose of providing sufficient support also in lateral direction, in an embodiment of a hay-making machine according to the invention the first chassis has a wheel set beam with free ends located on either side of the upwardly extending axis, a first wheel set being fastened to each free end of the wheel set beam.

For the purpose of reducing the unfavourable effect of possible soil irregularities on the working member, the first wheel set is preferably connected via a first ball joint with the free end of the wheel set beam. In an analogous manner it is advantageous when the second chassis is connected via a second ball joint with the front end of the chassis beam.

A further reduction of the effect of soil irregularities is obtained when the first wheel set and/or the second chassis are/is constituted by a so-called tandem wheel set.

Alternatively the effects of soil irregularities are reduced when the first wheel set and/or the second chassis are/is provided with a first carrier beam with free carrier beam ends located on either side of the relevant end, each free carrier beam end being connected with a second wheel set, and in that a second carrier beam is disposed on the first carrier beam, the second carrier beam extending in a direction parallel to a normal direction of travel of the hay-making machine, the second carrier beam having a front carrier beam end, and in that a third wheel set is connected with the front end. In this situation it is further advantageous when the second wheel set and/or the third wheel set are/is constituted by a so-called tandem wheel set.

For the purpose of adjusting the position of the second chassis relative to the first chassis, in a preferred embodiment of a hay-making machine according to the invention the chassis beam comprises two chassis beam parts which are interconnected via a pivotal axis extending transversely to the normal direction of travel of the hay-making machine, the pivotal axis being located between the front end of the chassis beam and the upwardly extending axis. The hay-making machine is in particular provided with adjusting means for adjusting the angle made by the chassis beam parts relative to each other. In an advantageous manner the adjusting means comprise a hydraulically or pneumatically adjustable cylinder. The angle adjustment may alternatively also take place by means of a screw spindle.

The invention will be explained in further detail by way of example with reference to an embodiment shown in the drawing, in which:
Figure 1 shows schematically a side view of a hay-making machine according to the invention, and

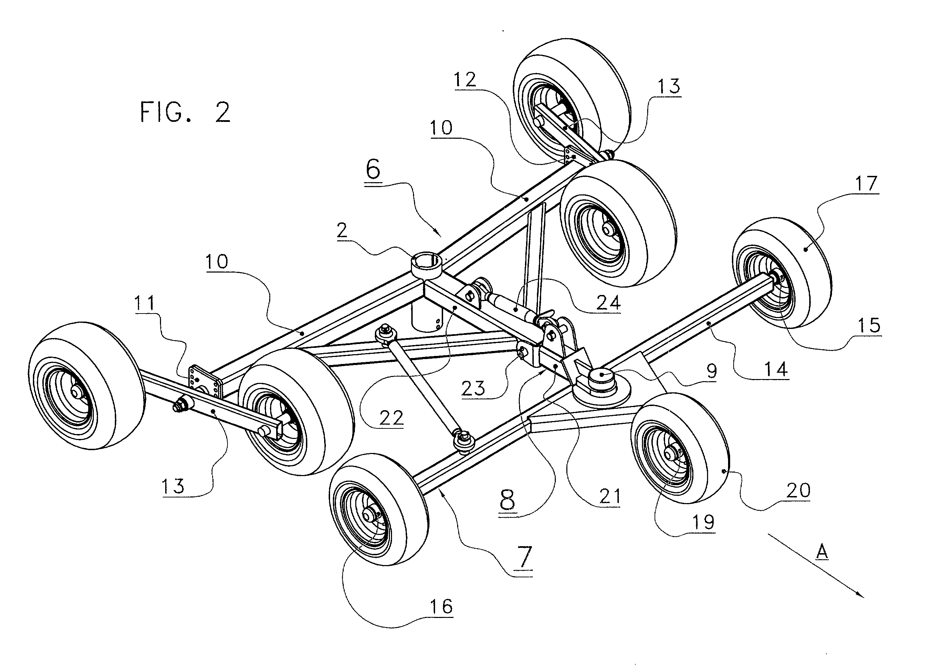

Figure 2 is a perspective view of a first and a second chassis for a hay-making machine according to the invention.

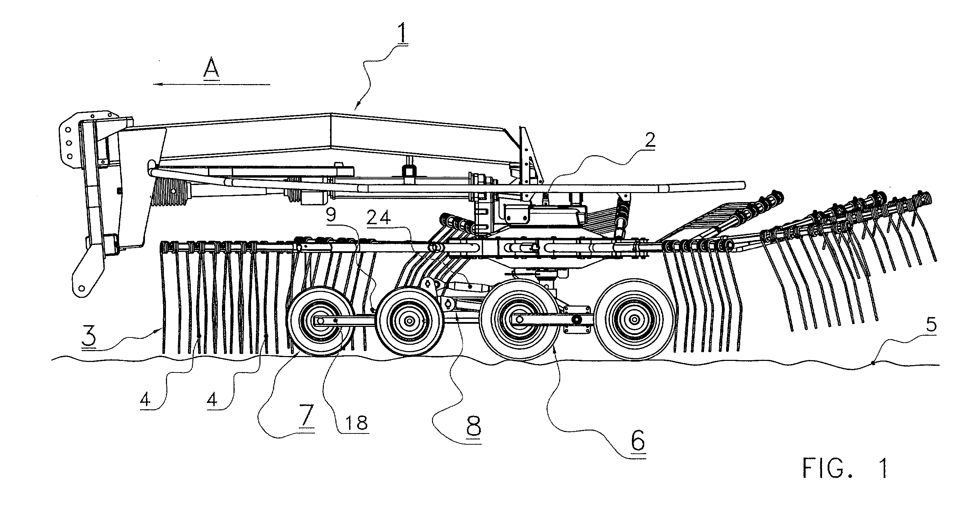

Figure 1 shows a hay-making machine 1, in the present embodiment constituted by a rake having a working width of approximately 5.25 metres. The hay-making machine 1 is pulled in the normal direction of travel A by a (non-shown) pulling vehicle.

The hay-making machine 1 comprises an upwardly extending axis 2, around which a working member, in the present situation a rake member 3, is rotatably fastened. The rake member 3 comprises working elements evenly disposed along its circumference, in the present machine designed as rake elements 4. These may have a width of approximately 50 cm measured in radial direction.

According to the invention the working member 3 is supported from the ground 5 via a first chassis 6 and a second chassis 7. For the fastening of the first chassis 6 to the second chassis 7 serves a chassis beam 8 fitted to the first chassis 6. Said chassis beam 8 extends from the upwardly extending axis 2 in a direction parallel to a normal direction of travel A of the hay-making machine 1, in other words the chassis beam 8 extends forwardly. The chassis beam 8 has a front end 9. The second chassis 7 is connected with said front end 9. Just because the second chassis 7 is fastened to this front end, the working member 3 will have an extra support in forward direction, so that undesired tilt in forward direction of the working member 3 is prevented.

Although the first chassis may comprise one wheel, for the lateral stability of the working member it is preferred when the first chassis 6 has a wheel set beam 10 with free ends 11 and 12 located on either side of the upwardly extending axis 2. To each free end 11, 12 of the wheel set beam 10 there is fastened a first wheel set 13. In the example shown the first wheel set 13 is constituted by a so-called tandem wheel set. Such a tandem wheel set is known per se. Also the second chassis 7 may comprise a so-called tandem wheel set.

Although not shown in the figures, for the purpose of reducing the effects of soil irregularities on the working member 3, the first wheel set 13 may be connected via a first ball joint with the relevant free end 11, 12 of the wheel set beam 10. In practice a first wheel set appears to be provided with a first carrier beam with free carrier beam ends located on either side of the relevant end, a second wheel set (in particular comprising a single wheel or a tandem wheel set), being connected with each free carrier beam end, and with a second carrier beam disposed on the first carrier beam, the second carrier beam extending in a direction parallel to a normal direction of travel of the hay-making machine, the second carrier beam having a front carrier beam end, and a third wheel set (in particular comprising a single wheel or a tandem wheel set) being connected with the front end, so as to provide an excellent reduction of soil irregularities. Because the latter construction is more expensive than a tandem wheel set, it may be preferred to use a tandem wheel set, in view of the costs involved.

In the embodiment shown the second chassis 7 comprises a first carrier beam 14 with free carrier beam ends 15, 16 located on either side of the relevant end. The first carrier beam 14 extends transversely to the normal direction of travel A of the hay-making machine 1. With each free carrier beam end 15, 16 there is connected a second wheel set 17. In the embodiment shown each second wheel set 17 is constituted by a single wheel. However, it will be obvious that the second wheel set 17 may also comprise a tandem wheel set. A second carrier beam 18 is disposed on the first carrier beam 14 and extends in a direction parallel to a normal direction of travel A of the hay-making machine 1. The second carrier beam 18 has a front carrier beam end 19 with which a third wheel set 20 is connected. In the embodiment shown the third wheel set 20 is constituted by a single wheel. However, it will be obvious that the third wheel set 20 may also comprise a tandem wheel set.

In the embodiment shown the chassis beam 8 comprises two chassis beam parts 21, 22 which are interconnected via a pivotal axis 23 extending transversely to the normal direction of travel A of the hay-making machine 1. The pivotal axis 23 is located between the front end 9 of the chassis beam 8 and the upwardly extending axis 2. With the aid of adjusting means 24, in the example shown constituted by a cylinder, which is controlled hydraulically or pneumatically, the angle between the chassis beam parts 21, 22 may be adjusted, and thus the position of the first chassis relative to the second chassis may be adjusted. The angle adjustment may also take place by means of a screw spindle. By adjusting the angle between the chassis beam parts it may be ensured that the rake elements 4 move at the front side parallel to the ground.

## Claims

1. A hay-making machine (1) provided with at least one working member which is rotatable about an upwardly extending axis (2) for working crop lying on the ground, said working member being supported from the ground (5) via a first chassis (6), **characterized in that** a chassis beam (8) is fitted to the first chassis (6), the chassis beam (8) extending from the axis (2) in a direction parallel to a normal direction of travel (A) of the hay-making machine (1), the chassis beam (8) having a front end (9), and **in that** a second chassis (7) is connected with the front end (9).

2. A hay-making machine (1) as claimed in claim 1, **characterized in that** the first chassis (6) has a wheel set beam (10) with free ends (11, 12) located on either side of the upwardly extending axis (2), a first wheel set (13) being fastened to each free end (11, 12) of the wheel set beam (10).

3. A hay-making machine (1) as claimed in claim 2, **characterized in that** the first wheel set (13) is connected via a first ball joint with the free end of the wheel set beam (10).

4. A hay-making machine (1) as claimed in any one of the preceding claims, **characterized in that** the second chassis (7) is connected via a second ball joint with the front end of the chassis beam (8).

5. A hay-making machine as claimed in any one of the preceding claims, **characterized in that** the first wheel set (13) and/or the second chassis (7) are/is constituted by a so-called tandem wheel set.

6. A hay-making machine as claimed in any one of the preceding claims, **characterized in that** the first wheel set (13) and/or the second chassis (7) are/is provided with a first carrier beam (14) with free carrier beam ends (15, 16) located on either side of the relevant end, each free carrier beam end (15, 16) being connected with a second wheel set (17), and **in that** a second carrier beam (18) is disposed on the first carrier beam (14), the second carrier beam (18) extending in a direction (A) parallel to a normal direction of travel of the hay-making machine (1), the second carrier beam (18) having a front carrier beam end (19), and **in that** a third wheel set (20) is connected with the front end.

7. A hay-making machine as claimed in claim 6, **characterized in that** the second wheel set (17) and/or the third wheel set (20) are/is constituted by a so-called tandem wheel set.

8. A hay-making machine as claimed in any one of the preceding claims, **characterized in that** the chassis beam (8) comprises two chassis beam parts (21, 22) which are interconnected via a pivotal axis (23) extending transversely to the normal direction of travel (A) of the hay-making machine (1), the pivotal axis (23) being located between the front end (9) of the chassis beam (8) and the upwardly extending axis (2).

9. A hay-making machine as claimed in claim 8, **characterized in that** the hay-making machine (1) is provided with adjusting means (24) for adjusting the angle made by the chassis beam parts (21, 22) relative to each other.

10. A hay-making machine as claimed in claim 9, **characterized in that** the adjusting means (24) comprise a hydraulically or pneumatically operable cylinder or a screw spindle.
